# EUROPEAN PATENT SPECIFICATION

(11) **EP 2 033 507 B1**
(45) Date of publication and mention of the grant of the patent: **13.07.2011**
(21) Application number: 08161568.4
(22) Date of filing: 31.07.2008
(51) Int. Cl.: A01B 33/02

(54) **An improved agricultural tool**
Verbessertes landwirtschaftliches Werkzeug
Outil agricole amélioré

(30) Priority: 06.09.2007 IT RE20070097
(43) Date of publication of application: 11.03.2009
(73) Proprietor: Eurosystems S.P.A., 42045 Luzzara (Reggio Emilia) (IT)
(72) Inventor: Bovi, Fabio, 42045, Luzzara (Reggio Emilia) (IT)
(74) Representative: Corradini, Corrado

(56) References cited:
- EP-A- 1 125 485
- WO-A-2006/128249
- DE-B- 1 113 109
- DE-C- 427 565
- GB-A- 802 866
- US-A- 4 049 059
- US-A- 4 191 259
- US-A1- 2006 037 763
- US-B1- 6 945 333

## Description

The invention relates to an agricultural tool which is mainly suited to working on small strips of land, market gardens or gardens. In particular, the present invention relates to a motor-hoe which can be driven and guided by a user on foot, such as to perform hoeing, weeding and tilling operations, for example when preparing for sowing.

As is known, usual motor-hoes generally comprise a support frame, which is provided with a grip or handlebar gripped by the user to guide the machine, and on which a motorised horizontal-axis rotating shaft is installed, on which two or more tillers destined to be in contact with the ground are fixed, in order to move and break up clumps.

The support frame can further be provided with one or more support wheels, which can be located either anteriorly or posteriorly of the rotating tiller-bearing shaft, the function of which is to facilitate the displacements of the motor-hoe on the ground when the motor-hoe is inactive with the rotating shaft stationary. During the working of the land, the support wheels must not normally come into contact with the ground in order not to interfere with the action of the tiller bars, except in the rare cases when it is desired to limit as much as possible the penetration of the tiller bars into the ground, for example in order to only slightly move the clumps of earth.

For this reason, the support wheels of some motor-hoes are borne by an oscillating support, which is hinged to the support frame and can be blocked at least in a lowered position, in which it places the support wheels in contact with the ground, and in a raised position, in which it places the support wheels at such a height as not to be able to be in contact with the ground.

A rest element is also commonly installed on the support frame, which rest element is typically a shaped rod, which is located posteriorly with respect to the tiller bars and which remains in contact with the ground during the working, such as to obstruct the advancement of the motor-hoe caused by the tiller bar rotation, and such as to establish an inclination of the support frame with respect to the ground, i.e. the position of the centre of gravity of the motor-hoe with respect to the rotation axis of the tiller bars.

The position of the centre of gravity of the motor-hoe influences the depth the tiller bars work at: if the centre of gravity is displaced forward, the tiller bars tend to advance the motor-hoe without cutting deep, while if the centre of gravity is displaced backwards the tiller bars tend to cut more deeply into the ground, leaving the motor-hoe unable to move.

To enable regulation of the working depth of the tiller bars, the support rod is slidably housed in a guide hub fixed to the support frame, where it is blocked by friction by a transversal locking screw, which is generally provided with a handle or grip with which it can be manually loosened by a user in order to enable relative sliding of the support rod in the guide hub, such as to vary the height of the rest point and therefore the inclination of the support frame.

A drawback of this solution is however that the regulation of the height of the support rod is a rather difficult and laborious operation, in which the user first has to unscrew the locking screw before positioning the rod with respect to the guide hub, before being able to newly tighten the locking screw.

Further, this operation generally requires the use of both hands, so that the user must usually let go of his grip of the motor-hoe, possibly resting it on a support element and getting help to do the operation.

Document US 2006/037763 discloses an agricultural tool which, in its frontal part, has a supporting element and rotating working elements for working the soil. The support element can be fixed in a plurality of positions relatively to the frame of the tool. The support element is hinged in such a way that it can rotate and translate in the inside of slots provided in symmetrical flanges connected to the support element. The flanges are connected between them by a pin that can be blocked on a recess belonging to a plurality of recesses present on portions connected to the agricultural tool's frame, so that the support element can be made to rotate with respect to its hinge and blocked in one of the position allowed by the recesses.

An aim of the present invention is to obviate the above-mentioned drawback in the prior art, by providing an agricultural tool of the above-described type, in which the height of the support rod can be regulated more comfortably, rapidly and precisely.

A further aim of the invention is to reach the above-mentioned objective with a solution which is simple, rational and relatively inexpensive.

The aims are attained by the characteristics of the invention as reported in independent claim 1. The dependent claims delineate preferred and/or particularly advantageous aspects of the invention.

In particular, an agricultural tool is provided, comprising a support frame on which at least a work tool is installed, which tool remains in contact with the ground in order to perform a work operation, means for rotating the work tool about a substantially horizontal rotation axis on the support frame, and a rest element which remains in contact with the ground such as to define a position of a centre of gravity of the tool with respect to the rotation axis of the work tool.

According to the invention, the rest element is joined to the support frame by means of a hinge pin, which is inserted internally of a slot, such as to enable the rest element to rotate about the axis of the pin and to translate in at least a sliding direction defined by the play of the pin in the slot. The rest element further comprises means for constraining which couple, following a movement of the rest element in the sliding direction, with corresponding means for blocking fixed to the support frame, such as to block the rest element in a plurality of angular positions with respect to the axis of the hinge pin. Finally, a spring is preferably interposed between the rest element and the support element, which spring exerts a recall force having at least a component in the sliding direction, such as to maintain the means for constraining in a coupled configuration with the means for blocking.

Thanks to this solution, the height of the rest element can be effectively modified and regulated by the user very simply and rapidly, simply by freeing the rest element from the blocking means, causing it to rotate such as to vary the inclination thereof, and finally newly coupling it to the means for blocking. This operation can also be performed by the user with a single hand, while with the other hand he can hold up the agricultural tool. Finally the rest element is always solidly joined to the support frame, thus preventing it from accidentally detaching and getting lost during use.

The agricultural tool further comprises at least a support wheel, which is borne by a support arm which is joined to the support frame in a similar way to the rest element. In particular, the support arm is joined to the support frame by means of a hinge pin inserted in a slot, such as to enable the support arm to rotate about the axis of the hinge pin and to translate in at least a sliding direction which is defined by the play of the pin in the slot. The oscillating arm further comprises means for constraining which couple, following a movement of the support arm in the sliding direction, with means for blocking fixed to the support frame, such as to block the oscillating arm in a plurality of angular positions with respect to the axis of the hinge pin. Finally, a spring is preferably interposed between the support arm and the support frame, which spring exerts a recall force having at least a component in the sliding direction, such as to maintain the means for constraining in a couple with the blocking means.

Thanks to this solution, and in a similar way as described for the rest element, the support arm can advantageously be displaced and blocked in at least a lowered position, in which it places the support wheel in contact with the ground, and a raised position, in which it places the support wheel at a level where it cannot touch the ground.

In particular, to make the construction of the agricultural tool especially simple, compact and economical, the rest element and the support arm of the wheel are joined to the support frame by a hinge pin fixed to the support frame, and are also singly provided with a respective slot in which the single hinge pin is inserted. For the same reasons, the means for constraining, respectively of the rest element and the support arm of the wheel, are coupled with means for blocking fixed to the support frame.

In a preferred embodiment of the invention, the support arm of the wheel is realised such as to comprise two lateral flanks which are opposite one another and separated by a hollow space, for example realised in a single shaped body having a concave transversal section. The rest element is at least partially received in the hollow space, such as to slide internally thereof following relative displacements with respect to the support arm.

In this way, the construction is further more compact and of a contained size, and furthermore the rest element is well protected internally of the oscillating arm, reducing the possibility of accidental impacts which might cause its displacement or damage.

Further characteristics and advantages of the invention will better emerge from a reading of the following description, provided by way of non-limiting example, with the aid of the figures illustrated in the appended tables of the drawings, in which:

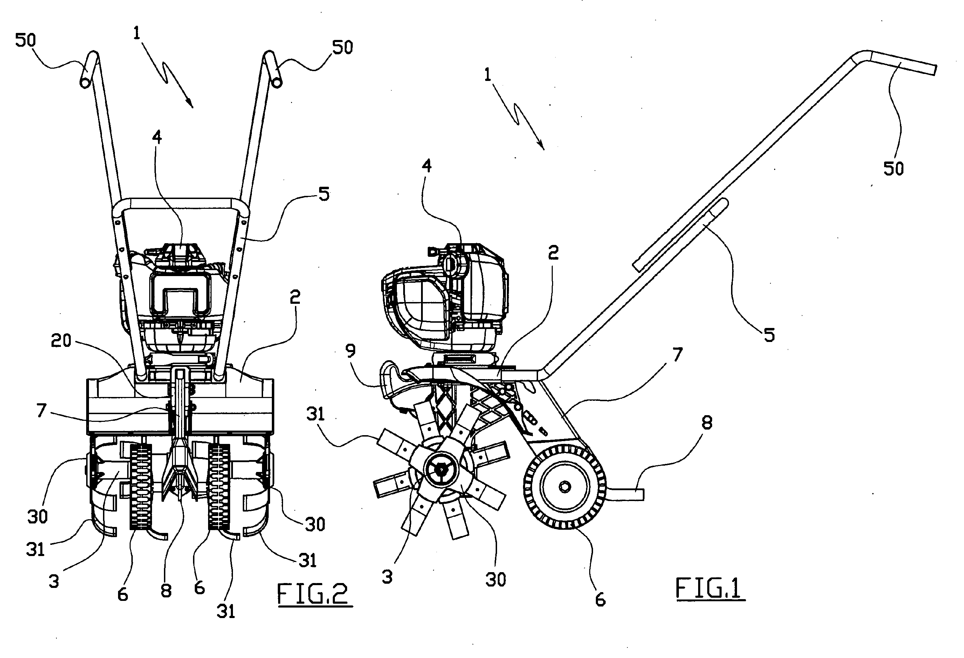

figure 1 is a lateral view of an agricultural tool of the invention;
figure 2 is a view from behind of the tool of figure 1;
figure 3 is a perspective view from below of the back part of the tool of figure 1;
figure 4 is an enlarged detail of figure 2;
figures 5 and 6 are a detail of figure 1 in which the support wheels are shown in two different positions;
figures 7 and 8 are the detail of figure 5, 6 partially sectioned along the line VII-VII of figure 4, in which the rest element is shown in two different positions;
figure 9 is the section along line IX-IX of figure 7;
figure 10 is a perspective lateral view of the support frame of the tool of figure 1;
figures 11 and 12 are a schematic lateral view of the tool of figure 1, shown at two moments during the mounting of the ballast.

The agricultural tool denoted in its entirety by 1 in the figures is a motor-hoe for hobby gardeners, which is particularly suitable for weeding and tilling operations on small areas of terrain, for example in kitchen gardens or gardens, and is guided and controlled by a user who proceeds on foot, walking behind the hoe.

The motor-hoe 1 comprises a rigid support frame 2 on which a horizontal-axis rotating shaft 3 is rotatably installed, on which four tiller bars 30 are coaxially keyed, which are singly provided with a central hub with a plurality of arched radial cutters 31 and which will come into direct contact with the terrain for moving and breaking clumps.

The rotating shaft 3 is powered by an internal combustion engine 4, typically a petrol engine provided with a relative tank, which is installed on the support frame 2 above the tiller bars 30 and is connected to the rotating shaft 3 by means of a drive system (not shown). The drive system is installed on board the support frame 2 and generally comprises a gearing of the worm-wormwheel type.

An upwards-inclined handlebar 5 is also fixed in the rear part of the support frame 2, which provides a pair of grips 50 which are held by the user to guide and control the displacements of the motor-hoe 1 on the terrain.

The handlebar 5 is conformed such as to be regulatable in length to suit it to various use requirements, as well as the sizes and preferences of the users. Special control organs (not shown) are generally installed on the handlebar 5, for example a throttle lever, and/or a motor cut-off switch 4, which are located at the grip 50 position in order to be readily activated by the user's hands.

Two identical support wheels 6 are also installed on the support frame 2, which are arranged reciprocally coaxially along a rotation axis which is parallel to the rotation axis of the rotating shaft 3, posteriorly with respect thereto, such as to be able to maintain contact with the terrain in order to facilitate displacement of the motor-hoe 1, when the rotating shaft 3 and the tiller blades 30 are still.

In particular, the support wheels 6 are rotatably coupled idle on opposite sides of a single support arm 7, which is directly joined to the support frame 2 and develops in a perpendicular direction with respect to the rotation axis of the support wheels 6.

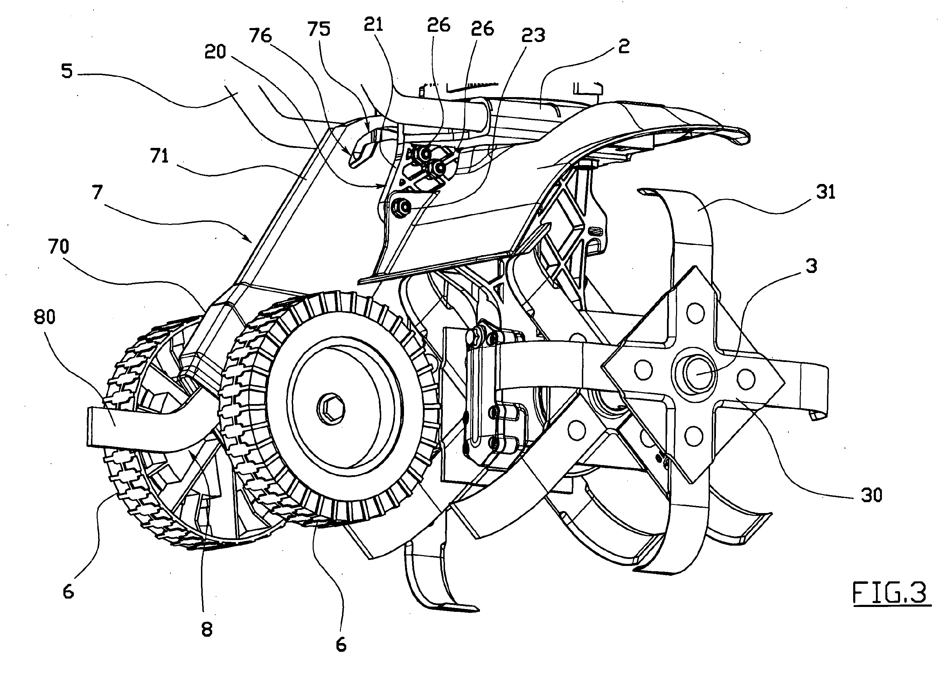

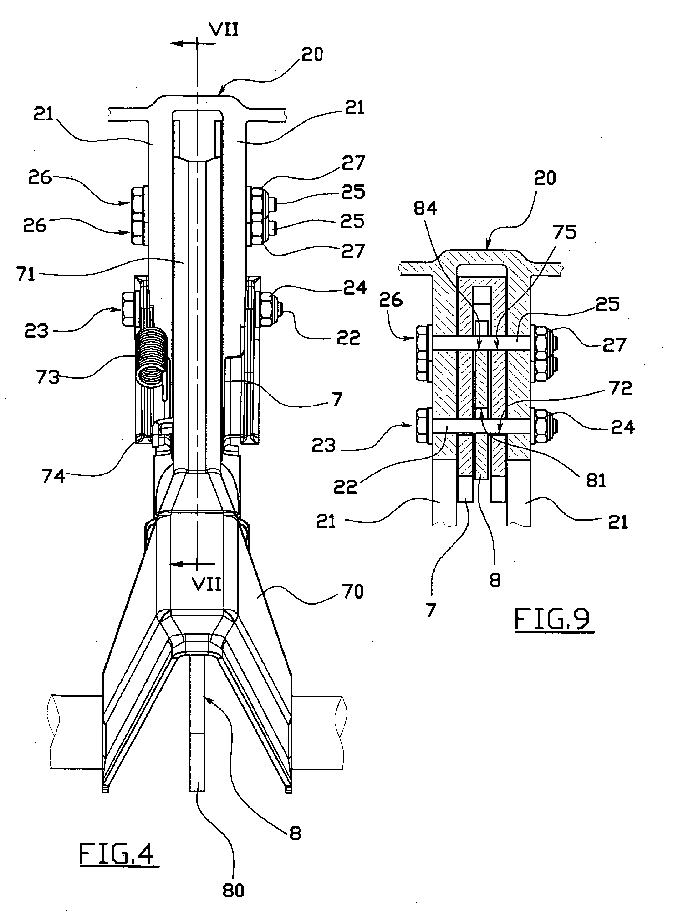

Along its longitudinal development (see figures 3 and 4), the support arm 7 exhibits a first broadened portion 70 to which the support wheels 6 are connected, and a second portion 71 having a generally flat and narrow shape, which lies substantially in a vertical plane, and is partially received in the hollow space defined between the opposite arms 21 of a forked body 20 which is fixed centrally in the back part of the support frame 2.

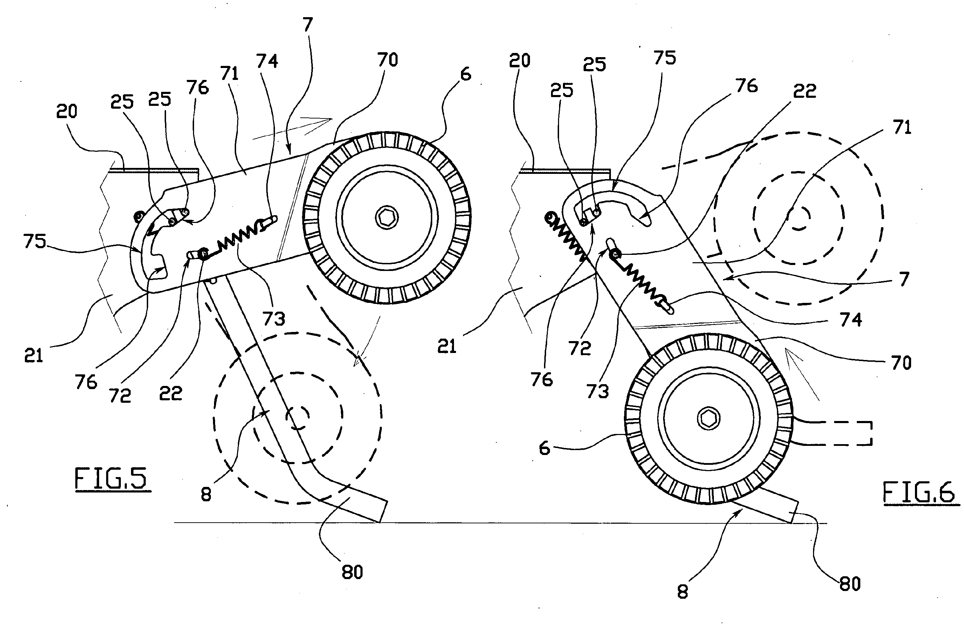

As illustrated in figures 5 and 6, the support arm 7 is joined to the forked body 20 by a transversal hinge pin 22, which is fixed to both the opposite arms 21 of the forked body 20 and is inserted in a first slot 72 afforded in the narrow portion 71 of the support arm 7.

In particular, the hinge pin 22 is constituted by a bolt 23, the screw stem of which is transversally and snugly inserted in two aligned holes respectively afforded in the opposite arms 21 of the forked body 20, where it is axially blocked by a lock nut 24 positioned externally of the hollow space in which the support arm 7 is housed (see figures 4 and 9).

The above-mentioned first slot 72 has a generally straight longitudinal development which is more or less parallel to the longitudinal development of the support arm 7, which a constant width which is substantially the same as the diameter of the hinge pin 22, so that the support arm 7 is free to rotate about the hinge pin 22, and is also free to make small translations with respect to the forked body 20, moving in the sliding direction defined by the longitudinal development of the first slot 72, between a first endrun position (shown in the figures), in which the distance between the hinge pin 22 and the rotation axis of the support wheels 6 is minimum, and a second endrun position (not illustrated) in which the distance is maximum.

In particular, the support arm 7 is normally kept in the first endrun position by a recall spring 73, which is directly hooked to the hinge pin 22 and a bracket 74 which projects from the support arm 7 such as to exert a recall force having at least a component in the sliding direction defined by the first slot 72.

A second slot 75 is afforded in the second narrow portion 71 of the support arm 7, which second slot 75 is located anteriorly of the first straight slot 72, and exhibits an arched development which is substantially centred on the axis of the hinge pin 22 when the support arm 7 is in the mentioned second endrun position.

A group (in the present embodiment two) of distinct transversal blocking pins 25 is inserted in the second slot 75, which are all equidistant from the hinge pin 22 and are solidly fixed to the opposite arms 21 of the forked body 20, such as to be able to slide in the second slot 75 during the rotation of the support arm 7 about the hinge pin 22.

In particular, each locking pin 25 is a bolt 26, the screw stem of which is transversally snugly inserted in two aligned holes respectively afforded in the opposite arms 21 of the forked body 20, where it is axially locked by a relative lock nut 27 positioned externally of the hollow space in which the support arm 7 is housed (see figures 4 and 9).

The opposite ends of the second arched slot 75 exhibit a respective broadening 76 which develops in a parallel direction to the sliding direction defined by the first straight slot 72, which broadening 76 contemporaneously receives the group of locking pins 25, such as to realise a coupling which prevents rotation of the support arm 7 about the hinge pin 22.

In this way, the coupling of each broadening 76 with the group of locking pins 25 defines a different angular blocking position of the support arm 7 with respect to the support frame 2.

In the illustrated example, the second arched slot 75 enables the support arm 7 to perform an oscillation of about 90° about the hinge pin 22, while the broadenings 76 enable the support arm 7 to be blocked in a lowered position (see figure 6) in which the support wheels 6 are in contact with the ground to facilitate displacements of the motor-hoe 1 when the tiller blades 30 are still, and a raised position (see figure 5) in which the support wheels 6 are not in contact with the ground in order to enable correct functioning of the motor-hoe 1 when the tiller blades 30 are rotating.

In order to pass from an angular blocking position into another, a user will simply have to axially pull the support arm 7 against the action of the recall spring 73, causing it to translate with respect to the hinge pin 22 towards the second axial endrun position, such as to free the blocking pins 25 from the relative broadening 76; then the user will have to manually rotate the support arm 7 about the hinge pin 22 up until the pin 22 is brought into the second angular blocking position, where the recall spring 73 will automatically translate the support arm 7 newly towards the first endrun position, such as to engage the locking pins 25 in the other broadening 76, by a snap-fit.

As can be seen in figures 3, 4 and 9, the support arm 7 is generally made from a shaped bar which exhibits an upper longitudinal rib and two lateral flanks which are identical and opposite one another, between which a narrow space is defined, developing vertically in the oscillating plane of the support arm 7.

In particular, the first broadened portion 70 of the support arm 7 has a substantially V-shaped transversal section having a concavity thereof facing downwards, while the narrow portion 71 has a U-shaped transversal section, also with the concavity thereof facing downwards.

Note that the previously-described first straight slot 72 and the second arched slot 75 of the support arm 7 are singly defined by two identical slots, perfectly opposite one another, which are respectively afforded in the two lateral flanks of the shaped bar which realises the support arm 7.

A shaped bar 8 is received in the hollow space of the support arm 7, which shaped bar 8 exhibits a slightly curved free first end 80 which will go into direct contact with the ground, and a second connecting end which is joined to the forked body 20 of the support frame 2.

The shaped body 8 functions as a posterior rest element for the motor-hoe 1 during the functioning of the tiller bars 30, such as to define the inclination of the support frame 2 with respect to the ground, and thus the position of the centre of gravity of the motor-hoe 1 with respect to the rotation axis of the rotating shaft 3, on which the depth of ground-penetration depends.

With the centre of gravity displaced forward, the motor-hoe 1 tends to advance over the ground without penetrating, while with the centre of gravity displaced further back (towards the user), the motor-hoe 1 tends to penetrate deeply, but without advancing.

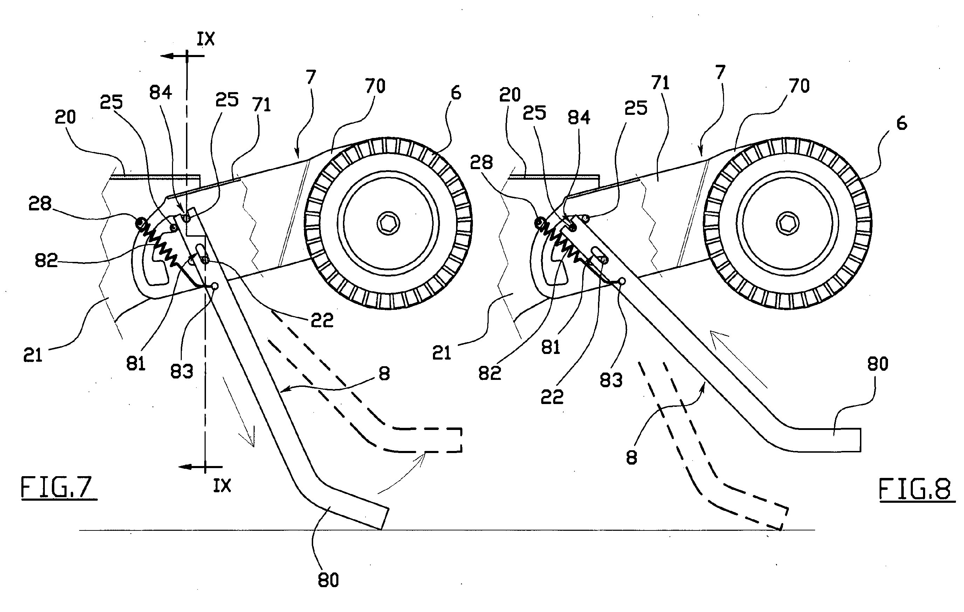

As illustrated in figures 7 and 8, the shaped bar 8 is joined to the forked body 20 by the above-mentioned transversal hinge pin 22, which is also inserted in a slot 81 afforded at the second connection end of the shaped body 8.

The slot 81 has a generally straight longitudinal development which is practically parallel to the longitudinal development of the shaped bar 8, with a constant width which is substantially equal to the diameter of the hinge pin 22, so that the shaped bar 8 is free to rotate about the hinge pin 22, and is also free to make small translations with respect to the forked body 20, moving in the sliding direction defined by the longitudinal development of the slot 81, between a first endrun position (shown in the figures), in which the distance between the hinge pin 22 and the curved end 80 of the bar 8 is minimum, and a second endrun position (not illustrated) in which the distance is maximum.

In particular, the shaped bar 8 is normally kept in the first endrun position by means of a recall spring 82, which is partially housed internally of the hollow space of the support arm 7, hooked to a transversal pin 28 fixed to the forked body 20 and to a through-hole 83 afforded in the shaped bar 8, such as to exert a recall force having at least a component in the sliding direction defined by the slot 81.

A fully-transversal gully 84 is afforded at the end of the shaped bar 8, a concavity of which faces in the sliding direction defined by the straight slot 81 and selectively receives one only of the above-mentioned locking pins 25, such that it realises a coupling which prevents the rotation of the shaped bar 8 about the hinge pin 22.

In this way, the coupling of the transversal gully 84 with each locking pin 25 defines a different angular blocking position of the shaped bar 8 with respect to the support frame 2.

The useful height of the shaped bar depends on the angular position thereof, i.e. the difference in height between the curved end 80 and the rotation axis of the rotating shaft 3, from which the inclination of the support frame consequently depends with respect to the ground.

In the illustrated example, the locking pins 25 enable the shaped bar 8 to be blocked in a lowered position (see figure 7), in which the useful height is greater so that the centre of gravity of the motor-hoe 1 is displaced forward, and a raised position (see figure 8) in which the useful height is lower so that the centre of gravity of the motor-hoe 1 is displaced backwards.

In order to pass from an angular locking position into another, a user simply has to axially pull the shaped bar 8 against the recall spring 82 action, causing it to translate with respect to the hinge pin 22 towards the second axial endrun position, such as to free the locking pin 25 from the transversal gully 84; then the user will manually rotate the shaped bar 8 about the hinge pin 22, until it is at the second angular locking position, where the recall spring 82 tends to make the shaped bar 8 automatically translate towards the first endrun position, such as to engage the transversal gully 84 in the other locking pin 5 in a snap-fit.

We stress that the movements of the shaped bar 8 occur internally of the hollow space of the support arm 7 and thus independently of the movements and the position thereof.

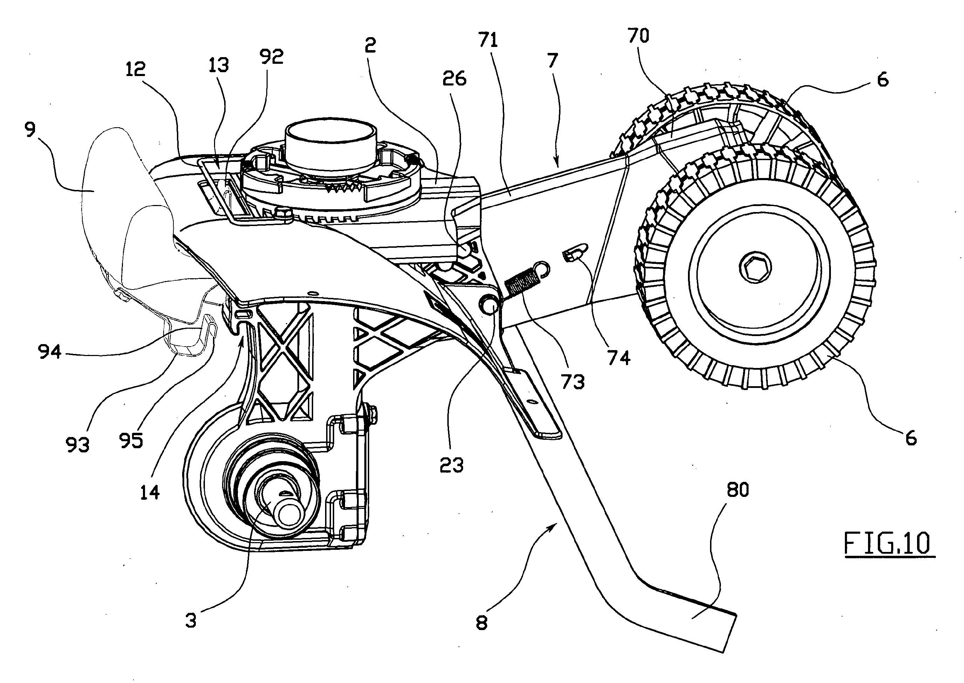

As illustrated in figure 10, a heavy ballast body 9 is also installed on the support frame 2, made for example of steel, which functions as ballast to weigh down the support frame 2 such that the tiller bars 30 exert a greater pressure on the terrain and can therefore cut deeper down.

In the invention the ballast body 9 is removable connected to the support frame 2 by joint-coupling means, such as to render the mounting and dismounting of the ballast body 9 particularly easy and simple, for example in order to change the total weight and thus the depth of penetration of the motor-hoe.

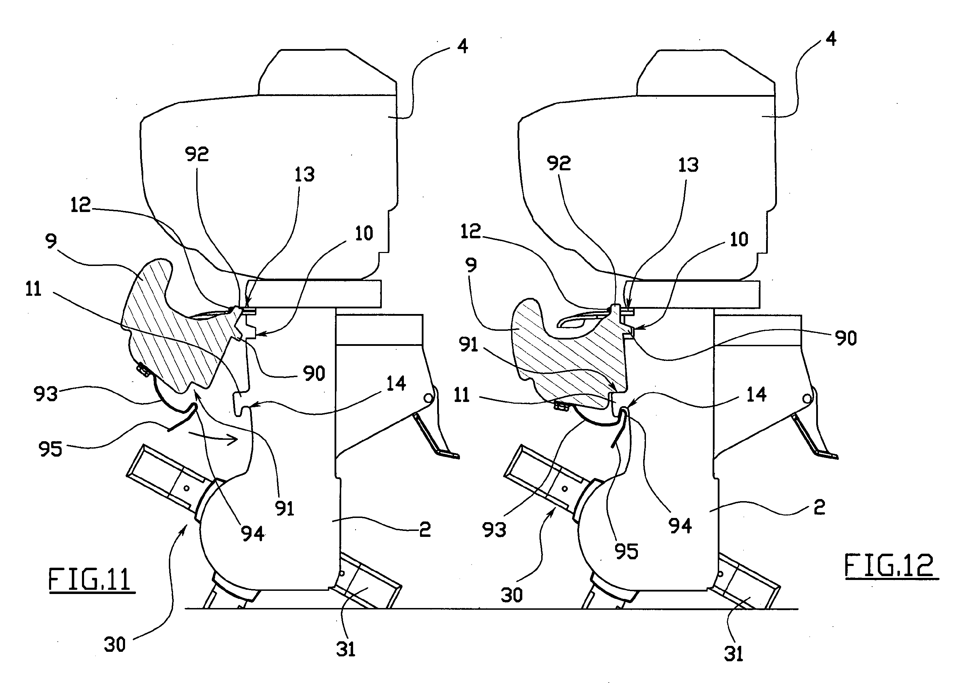

As illustrated in figures 11 and 12, the back flank of the ballast body 9 lies on the front flank of the support frame 2, and the means for coupling comprise a first tooth 90 projecting from the back flank of the ballast body 9, which is received in a complementary seating 10 of the support frame 2 such as to prevent transversal sliding of the ballast body 9, i.e. vertically-directed sliding. The means for coupling further comprise a shelf 11 projecting from the front flank of the support frame 2, which makes available a horizontal rest surface also destined to support the ballast body 9 in a vertical direction, coupling with a complementary seating 91 afforded in the bottom of the ballast body 9 itself.

The means for coupling also comprise a first spring 12 having both ends fixed to the support frame 2, such as to define a pocket 13 for receiving a second tooth 92 fashioned in the upper part of the ballast body 9 for retaining the ballast body and preventing it from making horizontal displacements with respect to the support frame 2.

Finally, the means for coupling comprise a second spring 93 conformed as flexible platelet, fixed on the bottom of the ballast body 9 and projecting from the posterior flank thereof, which is shaped such as to provide a hook 94 which snap-fits together with an undercut gully 14 afforded in the projecting shelf 101 of the support frame 2, such as to prevent movements of the ballast body 9 in a horizontal direction.

As illustrated in figures 11 and 12, the mounting of the ballast body 9 involves the user's first inserting the upper tooth 92 into the pocket 13 defined by the spring 12, and then rotating the ballast body 9 about the hooking point with the spring 12, up to when the lower spring 93 flexes in contact with the shelf 11 and engages in a snap-fit in the undercut gully 14, solidly blocking the ballast body 9 in the position in which the projecting tooth 90 is received in the relative seating 10, and the shelf 11 is retained in the relative seating 91. To dismount the ballast body 9, the lower spring 93 is provided with an appendage 95 which can be gripped by the user to flex the spring 93, such as to free the hook 94 from the undercut gully 14 before rotating the ballast body 9 in an opposite direction until the upper tooth 92 is freed by the spring 12.

Obviously an expert in the field might make numerous modifications of a technical-applicational nature to the motor-hoe 1 as described herein, without forsaking the ambit of protection as claimed herein below.

## Claims

1. An agricultural tool comprising a support frame (2) on which are installed:
at least a work tool (30) which will be in contact with a terrain in order to perform an operation, means for activating (4) for rotating the work tool (30) about a substantially horizontal rotation axis on the support frame (2), a rest element (8) which will be in contact with the terrain such as to define a position of a centre of gravity of the tool with respect to the rotation axis of the work tool (30) and at least a support wheel (6) borne by a support arm (7) which is joined to the support frame (2), wherein the rest element (8) is joined to the support frame (2) by a hinge pin (22) which is inserted in a slot (81) such as to enable the rest element (8) to rotate about the hinge pin and to translate in at least a sliding direction defined by a play of the hinge pin in the slot (81), the rest element (8) comprising means for constraining (84) for coupling, following a movement of the rest element (8) and in the sliding direction, with means for blocking (25) fixed to the support frame (2) such as to block the rest element (8) in a plurality of angular positions with respect to the axis of the hinge pin, **characterised in that** said support wheel (6) is joined to the support frame (2) by the hinge pin (22) inserted in a slot (72), such as to enable the support arm (7) to rotate about the hinge pin (22) and to translate in at least a sliding direction defined by a play of the hinge pin (22) in the slot (72), the support arm (7) comprising means for constraining (76) for coupling, following a movement of the support arm (7) in the sliding direction, with the means for blocking (25) fixed to angular positions with respect to the axis of the hinge pin (22).

2. The agricultural tool of claim 1, **characterised in that** the rest element (8) is further connected to the support frame (2) by a spring (82) which exerts a recall force having at least a component in the sliding direction, in order to maintain the means, for constraining (84) in a coupled arrangement with the means for blocking (25).

3. The agricultural tool of claim 1, **characterised in that** the support arm (7) is further connected to the support frame (2) by a spring (73) which exerts a recall force having at least a component going in a same direction as the sliding direction, in order to keep the means for constraining (76) in a coupled situation with the means for blocking (25).

4. The agricultural tool of claim 1, **characterised in that** the rest element (8) and the support arm (7) are joined to the support frame (2) by a same hinge pin (22) which is fixed to the support frame (2), and are singly provided with a respective slot (81, 72) in which the hinge pin (22) is inserted.

5. The agricultural tool of claim 1, **characterised in that** the means for constraining (84, 76) respectively of the rest element (8) and the support arm (7) are destined to couple with means for blocking (25) which are fixed to the support frame (2).

6. The agricultural tool of claim 5, **characterised in that** the means for blocking (25) comprise a group of transversal pins (25) fixed to the support frame (2), the means for constraining the rest element (8) comprising a seating (84) for alternatively coupling with each of the transversal pins (25) of the group, the means for constraining of the support arm (7) comprising at least two seatings (76) which alternatively couple with the whole group of transversal pins (25).

7. The agricultural tool of claim 1, **characterised in that** the support arm (7) comprises two opposite lateral flanks between which a hollow space is defined, internally of which hollow space the rest element (8) is at least partially housed.

8. The agricultural tool of claim 7, **characterised in that** the lateral flanks are defined by a single shaped body having a concave transversal section.

9. The agricultural tool of claim 1, **characterised in that** it comprises a ballast body (9) which is removably joined to the support frame (2) by means for joint-coupling.

10. The agricultural tool of claim 9, **characterised in that** the means for coupling comprise two bodies respectively of the ballast body (9) and the support frame (2), of one is a projecting body (90, 11) and one a hollow seating (10, 91) complementary to the projecting body (90, 11), which couple such as to prevent transversal sliding of the ballast body (9) with respect to the support frame (2).

11. The agricultural tool of claim 9, **characterised in that** the means for coupling comprise an elastic element (12) fixed to the support frame (2) such as to define a pocket (13) and a tooth (92) of the ballast body (9) which inserts in the pocket (13).

12. The agricultural tool of claim 9, **characterised in that** the means for coupling comprise an elastic element (93) fixed to the ballast body (9) and a seating (14) of the support frame (2), into which the elastic element (93) snap-fits.

## Patentansprüche

1. Landwirtschaftliches Werkzeug, das einen Tragrahmen (2) umfasst, auf den Folgendes aufgesetzt ist:
mindestens ein Arbeitswerkzeug (30), das in Kontakt mit dem Boden sein wird, um einen Arbeitsvorgang auszuführen, Betätigungsmittel (4) für die Drehung des Arbeitswerkzeugs (30) um eine im Wesentlichen waagrechte Drehachse auf dem Tragrahmen (2), ein Auflageelement (8), das derart in Kontakt mit dem Boden sein wird, dass es eine Lage eines Schwerpunkts des Werkzeugs gegenüber der Drehachse des Arbeitswerkzeugs (30) festlegt, und mindestens ein Stützrad (6), das von einem Tragarm (7) getragen wird, der mit dem Tragrahmen (2) verbunden ist, wobei das Auflageelement (8) mit dem Tragrahmen (2) durch einen Gelenkbolzen (22) verbunden ist, der derart in einen Schlitz (81) eingesetzt ist, dass er es dem Auflageelement (8) ermöglicht, um den Gelenkbolzen zu drehen und sich in mindestens einer Verschieberichtung zu verschieben, die durch ein Spiel des Gelenkbolzens im Schlitz (81) festgelegt wird, wobei das Auflageelement (8) Festhaltemittel (84) zum Verbinden im Anschluss an eine Bewegung des Auflageelements (8) in der Verschieberichtung mit Verriegelungsmitteln (25) umfasst, die derart am Tragrahmen (2) befestigt sind, dass sie das Auflageelement (8) in einer Vielzahl von Winkelstellungen bezogen auf die Achse des Gelenks verriegeln, **dadurch gekennzeichnet, dass** das Stützrad (6) mit dem Tragrahmen (2) durch einen Gelenkbolzen (22) verbunden ist, der derart in einen Schlitz (72) eingesetzt ist, dass er es dem Tragarm (7) ermöglicht, um den Gelenkbolzen (22) zu drehen und sich in mindestens einer Verschieberichtung zu verschieben, die durch ein Spiel des Gelenkbolzens (22) im Schlitz (72) festgelegt wird, wobei der Tragarm (7) Festhaltemittel (76) zum Verbinden im Anschluss an eine Bewegung des Tragarms (7) in der Verschieberichtung mit den Verriegelungsmitteln (25) umfasst, die derart am Tragrahmen (2) befestigt sind, dass sie den Tragarm (7) in einer Vielzahl von Winkelstellungen bezogen auf die Achse des Gelenkbolzens (22) verriegeln.

2. Landwirtschaftliches Werkzeug nach Anspruch 1, **dadurch gekennzeichnet, dass** das Auflageelement (8) ferner mit dem Tragrahmen (2) durch eine Feder (82) verbunden ist, die eine Rückstellkraft ausübt, die mindestens eine Komponente in der Verschieberichtung aufweist, um die Festhaltemittel (84) in einer mit den Verriegelungsmitteln (25) verbundenen Anordnung zu halten.

3. Landwirtschaftliches Werkzeug nach Anspruch 1, **dadurch gekennzeichnet, dass** der Tragarm (7) ferner mit dem Tragrahmen (2) durch eine Feder (73) verbunden ist, die eine Rückstellkraft ausübt, die mindestens eine in derselben Richtung wie die Verschieberichtung verlaufende Komponente aufweist, um die Festhaltemittel (76) in einem mit den Verriegelungsmitteln (25) verbundenen Zustand zu halten.

4. Landwirtschaftliches Werkzeug nach Anspruch 1, **dadurch gekennzeichnet, dass** das Auflageelement (8) und der Tragarm (7) mit dem Tragrahmen (2) durch denselben Gelenkbolzen (22) verbunden sind, der am Tragrahmen (2) befestigt ist, und dass sie einzeln mit einem entsprechenden Schlitz (81, 72) versehen sind, in den der Gelenkbolzen (22) eingesetzt ist.

5. Landwirtschaftliches Werkzeug nach Anspruch 1, **dadurch gekennzeichnet, dass** die Festhaltemittel (84, 76) des Auflageelements (8) beziehungsweise des Tragarms (7) dazu bestimmt sind, sich mit Verriegelungsmitteln (25) zu verbinden, die am Tragrahmen (2) befestigt sind.

6. Landwirtschaftliches Werkzeug nach Anspruch 5, **dadurch gekennzeichnet, dass** die Verriegelungsmittel (25) eine Gruppe von Querbolzen (25) umfassen, die am Tragrahmen (2) befestigt sind, wobei die Mittel zum Festhalten des Auflageelements (8) eine Aufnahme (84) zum abwechselnden Verbinden mit jedem der Querbolzen (25) der Gruppe umfassen, wobei die Festhaltemittel des Tragarms (7) mindestens zwei Aufnahmen (76) umfassen, die sich abwechselnd mit der gesamten Gruppe der Querbolzen (25) verbinden.

7. Landwirtschaftliches Werkzeug nach Anspruch 1, **dadurch gekennzeichnet, dass** der Tragarm (7) zwei einander gegenüberliegende seitliche Flanken umfasst, zwischen denen ein Hohlraum ausgebildet ist, wobei das Auflageelement (8) zumindest teilweise innerhalb des Hohlraums untergebracht ist.

8. Landwirtschaftliches Werkzeug nach Anspruch 7, **dadurch gekennzeichnet, dass** die seitlichen Flanken durch einen einzigen geformten Körper definiert sind, der einen konkaven Querschnitt aufweist.

9. Landwirtschaftliches Werkzeug nach Anspruch 1, **dadurch gekennzeichnet, dass** es einen Ballastkörper (9) umfasst, der durch Gelenkverbindungsmittel lösbar mit dem Tragrahmen (2) verbunden ist.

10. Landwirtschaftliches Werkzeug nach Anspruch 9, **dadurch gekennzeichnet, dass** die Verbindungsmittel zwei Körper des Ballastkörpers (9) beziehungsweise des Tragrahmens (2) umfassen, wobei einer ein vorstehender Körper (90, 11) und einer eine zum vorstehenden Körper (90, 11) komplementäre hohle Aufnahme (10, 91) ist, die sich derart miteinander verbinden, dass sie das Verschieben des Ballastkörpers (9) in Querrichtung gegenüber dem Tragrahmen (2) verhindern.

11. Landwirtschaftliches Werkzeug nach Anspruch 9, **dadurch gekennzeichnet, dass** die Verbindungsmittel ein am Tragrahmen (2) befestigtes elastisches Element (12) umfassen, um eine Tasche (13) und einen sich in die Tasche (13) einfügenden Zahn (92) des Ballastkörpers (9) zu definieren.

12. Landwirtschaftliches Werkzeug nach Anspruch 9, **dadurch gekennzeichnet, dass** die Verbindungsmittel ein am Ballastkörper (9) befestigtes elastisches Element (93) und eine Aufnahme (14) des Tragrahmens (2) umfassen, in die das elastische Element (93) einrastet.

## Revendications

1. Outil agricole comprenant un châssis de support (2) sur lequel sont installés : au moins un outil de travail (30) qui sera en contact avec un terrain de manière à exécuter une opération, des moyens d'actionnement (4) pour faire tourner l'outil de travail (30) autour d'un axe de rotation sensiblement horizontal sur le châssis de support (2), un élément d'appui (8) qui sera en contact avec le terrain de manière à définir une position d'un centre de gravité de l'outil par rapport à l'axe de rotation de l'outil de travail (30) et au moins une roue de support (6) portée par un bras de support (7) qui est relié au châssis de support (2), dans lequel l'élément d'appui (8) est relié au châssis de support (2) par un tourillon d'articulation (22) qui est inséré dans une fente (81) de manière à permettre à l'élément d'appui (8) de tourner autour du tourillon d'articulation et d'effectuer une translation dans au moins une direction de coulissement définie par un jeu du tourillon d'articulation dans la fente (81), l'élément d'appui (8) comprenant des moyens de sollicitation (84) pour l'accouplement, suivant un mouvement de l'élément d'appui (8) et dans la direction de coulissement, avec des moyens de blocage (25) fixés au châssis de support (2) de manière à bloquer l'élément d'appui (8) dans une pluralité de positions angulaires par rapport à l'axe du tourillon d'articulation, **caractérisé en ce que** ladite roue de support (6) est reliée au châssis de support (2) par le tourillon d'articulation (22) inséré dans une fente (72), de manière à permettre au bras de support (7) de tourner autour du tourillon d'articulation (22) et d'effectuer une translation dans au moins une direction de coulissement définie par un jeu du tourillon d'articulation (22) dans la fente (72), le bras de support (7) comprenant des moyens de sollicitation (76) pour l'accouplement, suivant un mouvement du bras de support (7) dans la direction de coulissement, avec les moyens de blocage (25) fixés au châssis de support (2), de manière à bloquer le bras de support (7) dans une pluralité de positions angulaires par rapport à l'axe du tourillon d'articulation (22).

2. Outil agricole selon la revendication 1, **caractérisé en ce que** l'élément d'appui (8) est connecté en outre au châssis de support (2) par un ressort (82) qui exerce une force de rappel ayant au moins une composante dans la direction de coulissement, de manière à maintenir les moyens de sollicitation (84) dans un agencement accouplé avec les moyens de blocage (25).

3. Outil agricole selon la revendication 1, **caractérisé en ce que** le bras de support (7) est connecté en outre au châssis de support (2) par un ressort (73) qui exerce une force de rappel ayant au moins une composante allant dans une même direction que la direction de coulissement, de manière à maintenir les moyens de sollicitation (76) dans une situation accouplée avec les moyens de blocage (25).

4. Outil agricole selon la revendication 1, **caractérisé en ce que** l'élément d'appui (8) et le bras de support (7) sont reliés au châssis de support (2) par un même tourillon d'articulation (22) qui est fixé au châssis de support (2) et sont individuellement pourvus d'une fente respective (81, 72) dans laquelle le tourillon d'articulation (22) est inséré.

5. Outil agricole selon la revendication 1, **caractérisé en ce que** les moyens de sollicitation (84, 76) respectivement de l'élément d'appui (8) et du bras de support (7) sont destinés à s'accoupler avec des moyens de blocage (25) qui sont fixés au châssis de support (2).

6. Outil agricole selon la revendication 5, **caractérisé en ce que** les moyens de blocage (25) comprennent un groupe de goupilles transversales (25) fixées au châssis de support (2), les moyens de sollicitation de l'élément d'appui (8) comprenant un siège (84) pour s'accoupler alternativement avec chacune des goupilles transversales (25) du groupe, les moyens de sollicitation du bras de support (7) comprenant au moins deux sièges (76) qui s'accouplent alternativement avec tout le groupe de goupilles transversales (25).

7. Outil agricole selon la revendication 1, **caractérisé en ce que** le bras de support (7) comprend deux flancs latéraux opposés entre lesquels un espace creux est défini, l'élément d'appui (8) étant logé au moins partiellement à l'intérieur de l'espace creux.

8. Outil agricole selon la revendication 7, **caractérisé en ce que** les flancs latéraux sont définis par un unique corps profilé ayant une section transversale concave.

9. Outil agricole selon la revendication 1, **caractérisé en ce qu'**il comprend un corps de lestage (9) qui est relié de manière amovible au châssis de support (2) au moyen d'un joint-accouplement.

10. Outil agricole selon la revendication 9, **caractérisé en ce que** les moyens d'accouplement comprennent deux corps respectivement du corps de lestage (9) et du châssis de support (2), dont un est un corps en saillie (90, 11) et un est un siège creux (10, 91) complémentaire au corps en saillie (90, 11), lesquels s'accouplent de manière à empêcher un coulissement transversal du corps de lestage (9) par rapport au châssis de support (2).

11. Outil agricole selon la revendication 9, **caractérisé en ce que** les moyens d'accouplement comprennent un élément élastique (12) fixé au châssis de support (2) de manière à définir une poche (13) et une dent (92) du corps de lestage (9) qui s'insère dans la poche (13).

12. Outil agricole selon la revendication 9, **caractérisé en ce que** les moyens d'accouplement comprennent un élément élastique (93) fixé au corps de lestage (9) et un siège (14) du châssis de support (2), dans lequel l'élément élastique (93) s'enclenche à pression.
